# EUROPÄISCHE PATENTSCHRIFT

(11) **EP 2 378 604 B1**
(45) Veröffentlichungstag und Bekanntmachung des Hinweises auf die Patenterteilung: **08.10.2014**
(21) Anmeldenummer: 11152743.8
(22) Anmeldetag: 31.01.2011
(51) Int. Cl.: H01M 10/48

(54) **Vorrichtung, Batterie und Verfahren zur Feststellung des Elektrolytfüllstandes einer elektrochemischen Zelle einer Batterie**
Device, battery and method for determining the electrolyte level of a battery's electrochemical cell
Dispositif, batterie et procédé de fixation du niveau de remplissage d'électrolyte d'une cellule électrochimique d'une batterie

(30) Priorität: 18.03.2010 DE 102010003040
(43) Veröffentlichungstag der Anmeldung: 19.10.2011
(73) Patentinhaber: Hoppecke Technologies GmbH & Co. KG, 08056 Zwickau (DE)
(72) Erfinder: Ohms, Detlef, 37085 Göttingen (DE); Fröhlecke, Karsten, 58453 Witten (DE)
(74) Vertreter: Vogel, Andreas

(56) Entgegenhaltungen:
- WO-A1-92/16979
- US-A- 3 696 362
- US-A- 5 841 357

## Beschreibung

Die Erfindung betrifft eine Vorrichtung zur Feststellung des Elektrolytfüllstandes wenigstens einer elektrochemischen Zelle einer Batterie mit einem flüssigen Elektrolyten. Ferner betrifft die Erfindung eine Batterie mit wenigstens einer elektrochemischen Zelle mit einem flüssigen Elektrolyten sowie ein Verfahren zur Feststellung des Elektrolytfüllstandes wenigstens einer elektrochemischen Zelle einer Batterie mit einem flüssigen Elektrolyten.

In Industriezellen, insbesondere Batterien, mit flüssigem Elektrolyten besteht die Notwendigkeit, den Elektrolytstand zu überwachen.

Der Elektrolyt einer Batterie, wie beispielsweise einer Bleibatterie oder einer alkalischen Batterie, wird während des Betriebes der Batterie verbraucht, beispielsweise durch Verdunstung, Verdampfung oder Zersetzung. Zur Aufrechterhaltung der Betriebsfähigkeit der Batterie ist es daher erforderlich Elektrolytflüssigkeit oder destilliertes Wasser nachzufüllen, bevor der Elektrolytspiegel eine bestimmte Grenze unterschreitet, beispielsweise unter die oberen Ränder der Elektroden absinkt. Dadurch verringert sich die arbeitsfähige Elektrodenoberfläche, so dass die Batterie nicht mehr die vorgesehene Kapazität und Leistung zeigen kann. Zusätzlich kann es zu Veränderungen kommen, durch die die Batterie dauerhaft geschädigt wird. An nicht eingetauchten Elektroden können Nebenreaktionen ablaufen, die die Betriebssicherheit der Batterie gefährden.

Um die Notwendigkeit des Nachfüllens einer Industriezelle, insbesondere einer Batterie, mit flüssigem Elektrolyten rechtzeitig festzustellen, ist es erforderlich den Elektrolytstand in der oder den elektrochemischen Zelle(n) der Batterie zu überwachen.

Dazu wurden in der Vergangenheit verschiedenste Lösungen vorgeschlagen. Eine einfache Möglichkeit ist die Herstellung eines durchsichtigen Gehäuses der Industriezelle beziehungsweise der Batterie und die damit verbundene Möglichkeit der optischen Überprüfung des Elektrolytstandes. Nachteilig ist jedoch, dass die Gehäuse, je nach gefordertem Gefäßmaterial, meist nur schwach durchsichtig oder völlig undurchsichtig sind. Ferner können sich eine Schmutzschicht oder Beschädigungen, wie Kratzer, auf dem Gehäuse der Industriezelle beziehungsweise der Batterie bilden, wodurch der Elektrolytstand nur noch schwerlich erkennbar wäre. Erschwerend kommt hinzu, dass Batterien häufig schwer zugänglich in oder zwischen anderen Bauelementen angeordnet sind.

Neben den optischen oder außen angebrachten Füllstandsüberwachungssystemen gibt es solche, die auf einem eintauchenden Sensor und elektrischen Messungen beruhen. Diese zeichnen sich durch eine besondere Einfachheit aus. Bei einer Gruppe dieser Füllstandsanzeiger wird ein elektrisch leitfähiger Fühler beziehungsweise Sensor in einen Zellraum der Batterie eingetaucht und das Entstehen eines elektrischen Kontaktes zur Elektrolytoberfläche zur Überwachung des Füllstandes des Elektrolyten genutzt. Der Einfachheit halber wird die zwischen diesem Fühler und einem Pol derselben Zelle oder einem Pol einer benachbarten Zelle entstehende Spannung genutzt, um den bestehenden Elektrolytkontakt zur Anzeige zu bringen. Dazu wird entweder die Spannung zwischen dem Fühler beziehungsweise dem Sensor und einem Batteriepol gemessen oder aber ein kleiner Gleichstrom zwischen dem Fühler beziehungsweise dem Sensor und dem Gegenpol in Kauf genommen.

Nachteilig ist aber dabei, dass der, wenn auch geringe, Stromfluss sowohl zur verstärkten Entladung der untersuchten Zelle beziehungsweise Zellengruppe als auch zur korrosiven Veränderung des Fühlers führt. Des Weiteren führt die Nutzung des Gleichspannungssignals zwischen dem Fühler beziehungsweise dem Sensor und dem Gegenpol zu Interpretationsproblemen, da sich der Wert der Potentiale einer Zelle beim Laden bzw. Entladen der Batterie verändern kann. Deshalb muss als Gegenpol unter Umständen ein Pol einer benachbarten Zelle, die einen Mindestzellabstand zu der Zelle mit dem Sensor aufweist, verwendet werden. Zwischen dem Fühler beziehungsweise dem Sensor und der Elektrolytoberfläche können dabei Spannungen auftreten, die beim Abreißen Funken, unter ungünstigen Umständen sogar Abreißfunken, bilden können.

Insbesondere bei alkalischen Zellen, die nur eine Nennspannung von ca. 1,2 V aufweisen, ist es nicht möglich, ein Gleichspannungssignal, welches auf der Messung in nur einer Zelle beruht, zur Feststellung des Füllstandes heranzuziehen.

Die der Erfindung zugrunde liegende Aufgabe liegt darin, eine Vorrichtung, eine elektrochemische Zelle und ein Verfahren zu schaffen, welche eine einfache und sichere Erkennung eines ausreichenden beziehungsweise nicht ausreichenden Füllstandes eines flüssigen Elektrolyten in einer elektrochemischen Zelle ermöglichen und die angeführten Nachteile vermeiden.

Diese Aufgabe wird erfindungsgemäß durch eine Vorrichtung zur Feststellung des Elektrolytfüllstandes wenigstens einer elektrochemischen Zelle einer Batterie mit einem flüssigen Elektrolyten mit den Merkmalen gemäß dem unabhängigen Patentanspruch 1, durch eine Batterie mit wenigstens einer elektrochemischen Zelle mit einem flüssigen Elektrolyten mit den Merkmalen gemäß Patentanspruch 12 sowie durch ein Verfahren zur Feststellung des Elektrolytfüllstandes wenigstens einer elektrochemischen Zelle einer Batterie mit einem flüssigen Elektrolyten mit den Merkmalen gemäß dem unabhängigen Patentanspruch 13 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit der erfindungsgemäßen Batterie sowie dem erfindungsgemäßen Verfahren und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch eine Vorrichtung zur Feststellung des Elektrolytfüllstandes wenigstens einer elektrochemischen Zelle einer Batterie mit einem flüssigen Elektrolyten, aufweisend eine Wechselspannungserzeugungseinrichtung zur Erzeugung einer Wechselspannung, eine erste Einrichtung zur galvanischen Trennung der erzeugten Wechselspannung von der wenigstens einen elektrochemischen Zelle, wobei die erste Einrichtung zur galvanischen Trennung zur Reduzierung der Wechselspannung ausgebildet ist, eine zweite Einrichtung zur galvanischen Trennung der erzeugten Wechselspannung von der wenigstens einen elektrochemischen Zelle, wobei die zweite Einrichtung zur galvanischen Trennung zur Erhöhung der Wechselspannung ausgebildet ist, wobei die zweite Einrichtung zur galvanischen Trennung parallel geschaltet zur ersten Einrichtung zur galvanischen Trennung angeordnet ist, aufweisend zumindest einen Fühler aus einem inerten Material und zumindest eine elektrische Anschlusseinrichtung zum Kontaktieren einer Elektrode der wenigstens einen elektrochemischen Zelle, wobei der Fühler und die elektrische Anschlusseinrichtung zwischen der ersten und der zweiten Einrichtung zur galvanischen Trennung parallel geschaltet zu diesen angeordnet sind, und aufweisend eine der zweiten Einrichtung zur galvanischen Trennung nachgeschaltete Schnittstelle zum Auslesen einer zwischen dem zumindest einen Fühler und der Elektrode anliegenden veränderten Wechselspannung, gelöst.

Eine derartige Vorrichtung zur Feststellung des Elektrolytfüllstandes wenigstens einer elektrochemischen Zelle einer Batterie mit einem flüssigen Elektrolyten ermöglicht eine einfache und sichere Erkennung eines ausreichenden beziehungsweise nicht ausreichenden Füllstandes eines flüssigen Elektrolyten in wenigstens einer elektrochemischen Zelle einer Batterie. Die Vorrichtung vermeidet das Vorhandensein von Gleichstrom zwischen dem Fühler und der Elektrode in dem flüssigen Elektrolyt. Hierdurch kommt es nicht zu Entladungen der untersuchten elektrochemischen Zelle beziehungsweise von Zellgruppen. Ferner vermeidet eine derartige Vorrichtung, dass korrosive Veränderungen des Fühlers auftreten. Der Wert der Potentiale einer elektrochemischen Zelle bleibt bei der Verwendung einer derartigen Vorrichtung beim Laden bzw. Entladen der elektrochemischen Zelle beziehungsweise der Batterie vorteilhafterweise unverändert. Die erfindungsgemäße Vorrichtung ermöglicht die Untersuchung des Füllstandes des Elektrolyten wenigstens einer elektrochemischen Zelle einer Batterie, ohne dass dabei als Gegenpol zu dem Fühler eine Elektrode einer benachbarten elektrochemischen Zelle benötigt wird.

Die Vorrichtung zur Feststellung des Elektrolytfüllstandes wenigstens einer elektrochemischen Zelle einer Batterie mit einem flüssigen Elektrolyten weist eine Wechselspannungserzeugungseinrichtung auf. Diese erzeugt eine Wechselspannung mit einer bestimmten Frequenz. Als Wechselspannungserzeugungseinrichtung kann beispielsweise das allgemeine Stromnetz mit einer Netzfrequenz von beispielsweise 50 oder 60 Hz dienen. Die wenigstens eine elektrochemische Zelle der Batterie weist einen flüssigen Elektrolyten auf, der in einem Gehäuse der wenigstens einen elektrochemischen Zelle angeordnet ist.

Die Vorrichtung weist eine erste Einrichtung zur galvanischen Trennung auf. Das heißt, über die erste Einrichtung zur galvanischen Trennung wird die von der Wechselspannungserzeugungseinrichtung erzeugte Wechselspannung von der wenigstens einen elektrochemischen Zelle, dass heißt dem Stromnetz der wenigstens einen elektrochemischen Zelle, beziehungsweise dem Batteriezweig galvanisch getrennt. Die erste Einrichtung zur galvanischen Trennung ist ferner zur Reduzierung der von der Wechselspannungserzeugungseinrichtung erzeugten Wechselspannung ausgebildet. Durch die erste Einrichtung zur galvanischen Trennung beziehungsweise die Reduzierung der Wechselspannung wird ermöglicht, dass eine Wechselspannungsamplitude mit wenigen Millivolt zwischen dem zumindest einen Fühler und der Elektrode der elektrochemischen Zelle beziehungsweise der Elektrolytoberfläche vorliegt.

Die Vorrichtung weist ferner eine zweite Einrichtung zur galvanischen Trennung auf. Diese zweite Einrichtung zur galvanischen Trennung ist neben der galvanischen Trennung zur Erhöhung der zwischen dem zumindest einen Fühler und der Elektrode der elektrochemischen Zelle anliegenden Wechselspannung ausgebildet. Das heißt, die zweite Einrichtung zur galvanischen Trennung trennt die elektrochemische Zelle beziehungsweise das Stromnetz der elektrochemischen Zelle von der der zweiten Einrichtung zur galvanischen Trennung nachgeschalteten Schnittstelle zum Auslesen der zwischen dem zumindest einen Fühler und der Elektrode anliegenden Wechselspannung. Das Erhöhen der zwischen dem Fühler und der Elektrode vorherrschenden Wechselspannung ermöglicht ein einfacheres Auslesen einer Veränderung der Wechselspannung zwischen dem zumindest einen Fühler und der Elektrode in dem Elektrolyten. Die erste und die zweite Einrichtung zur galvanischen Trennung sind parallel zueinander geschaltet. Das heißt, parallel zu den Ausgängen der ersten Einrichtung zur galvanischen Trennung ist die, vorzugsweise gleichwertige, zweite Einrichtung zur galvanischen Trennung angeordnet. Parallel zu der ersten und der zweiten Einrichtung zur galvanischen Trennung ist ferner auch der zumindest eine Fühler und eine Elektrode beziehungsweise ein Pol der zu überwachenden elektrochemischen Zelle angeordnet.

Durch die erste und zweite Einrichtung zur galvanischen Trennung wird vermieden, dass Ladungsträger von dem externen Stromkreis, das heißt dem an der Wechselspannungserzeugungseinrichtung anliegenden Stromkreis, zu dem Stromkreis der elektrochemischen Zelle beziehungsweise dem der Batterie fließen können, da keine elektrisch leitfähige Verbindung zwischen diesen beiden Stromkreisen besteht. Über die als Kopplungsglieder fungierenden ersten und zweiten Einrichtungen zur galvanischen Trennung können jedoch zwischen dem externen Stromkreis und dem Stromkreis der wenigstens einen elektrochemischen Zelle elektrische Signale, insbesondere Wechselspannungssignale, übertragen werden.

Der zumindest eine Fühler ist aus einem inerten Material beziehungsweise zumindest bereichsweise aus einem inerten Material ausgebildet. Dabei ist insbesondere der in Kontakt zu dem flüssigen Elektrolyten befindliche Bereich des zumindest einen Fühlers inert ausgebildet. Der zumindest eine Fühler der Vorrichtung dient zum Kontaktieren des Elektrolyten der wenigstens einen elektrochemischen Zelle der Batterie. Die Vorrichtung weist ferner eine elektrische Anschlusseinrichtung zum Kontaktieren einer Elektrode beziehungsweise eines Pols der wenigstens einen elektrochemischen Zelle auf. Die elektrische Anschlusseinrichtung kann beispielsweise eine elektrische Leitung umfassen. Der zumindest eine Fühler und die elektrische Anschlusseinrichtung sind parallel geschaltet zwischen der ersten und der zweiten Einrichtung zur galvanischen Trennung angeordnet. Zum Auslesen der zwischen dem zumindest einen Fühler und der Elektrode der elektrochemischen Zelle anliegenden Wechselspannung beziehungsweise zum Auslesen einer Veränderung der anliegenden Wechselspannung, weist die Vorrichtung eine Schnittstelle auf, die der zweiten Einrichtung zur galvanischen Trennung nachgeschaltet ist. Die Schnittstelle zum Auslesen der Wechselspannung ist ebenfalls parallel zu der zweiten Einrichtung zur galvanischen Trennung geschaltet.

Der Füllstand des flüssigen Elektrolyten in zumindest einer elektrochemischen Zelle der Batterie kann durch eine derartige Vorrichtung dadurch gemessen werden, dass der zumindest eine Fühler zunächst derartig in der zumindest einen elektrochemischen Zelle angeordnet wird, das dieser Kontakt zu dem Elektrolyten der zumindest einen elektrochemischen Zelle hat. Hierdurch entsteht ein Kurzschluss. Das heißt, sobald der Fühler den Elektrolyten berührt, werden die Sekundärseite der ersten Einrichtung zur galvanischen Trennung und die Primärseite der zweiten Einrichtung zur galvanischen Trennung kurzgeschlossen. Hierdurch liegt an den Ausgängen der zweiten Einrichtung zur galvanischen Trennung, die der Schnittstelle zum Auslesen der Wechselspannung zugewandt sind, keine Wechselspannung beziehungsweise kein verändertes Wechselspannungssignal an, was über eine an der Schnittstelle zum Auslesen der Wechselspannung anschließbare Anzeigeeinrichtung angezeigt werden kann. Sinkt während des Betriebes der Batterie der Elektrolytspiegel in der überwachten elektrochemischen Zelle, kommt es irgendwann dazu, dass der zumindest eine Fühler keinen Kontakt mehr zu dem Elektrolyten hat. Sobald der zumindest eine Fühler keinen Kontakt mehr zu dem Elektrolyten hat, wird der Kurschluss unterbrochen, es fliegt eine Wechselspannung an und das über die zweite Einrichtung zur galvanischen Trennung übertragene veränderte Wechselspannungssignal kann über die Schnittstelle ausgelesen werden. Hierdurch können der Betriebszustand und die Funktionsfähigkeit der elektrochemischen Zelle und damit der Batterie leicht überprüft werden.

Sowohl die Wechselspannungserzeugungseinrichtung, als auch die Schnittstelle zum Auslesen der Wechselspannung bzw. des Wechselspannungssignals sind spannungsmäßig durch die erste und zweite Einrichtung zur galvanischen Trennung galvanisch von der zumindest einen elektrochemischen Zelle beziehungsweise der Batterie getrennt und werden von einer externen Stromversorgung beziehungsweise einer externen Spannungsversorgung betrieben. Die externe Stromversorgung beziehungsweise externe Spannungsversorgung kann in bekannter Weise zusätzlich galvanisch von dem Netz der elektrochemischen Zelle beziehungsweise dem Batterienetz getrennt werden.

Durch die Verwendung von nieder-, mittel- beziehungsweise hochfrequentem Wechselstrom kann als Gegenpol zum Fühler jede Elektrode einer elektrochemischen Zelle der Batterie verwendet werden, da insbesondere keine Faraday'schen Umsätze, wie bei einer Potentialmessung oder Gleichspannungsanwendung, auftreten. Damit keine Veränderungen an dem Fühler beziehungsweise dem Sensor auftreten, ist der zumindest eine Fühler aus einem inerten Material ausgebildet. Hierdurch ist ein zeitlich unbegrenzter Einsatz des zumindest einen Fühlers und damit der Vorrichtung zum Feststellen des Elektrolytfüllstandes der wenigstens einen elektrochemischen Zelle der Batterie ermöglicht.

Der auftretende Wechselstrom beeinflusst die elektrochemische Zelle überhaupt nicht, so dass diese und auch der als Sensor ausgebildete Fühler keinen Schaden nimmt.

Die wenigstens eine elektrochemische Zelle kann eine Blei-Säure-Batterie oder eine alkalische Batterie beziehungsweise Teil einer Blei-Säure-Batterie oder einer alkalischen Batterie sein.

Gemäß einer bevorzugten Weiterentwicklung der Erfindung kann bei der Vorrichtung vorgesehen sein, dass die Wechselspannungserzeugungseinrichtung einen Wechselspannungsgenerator aufweist. Dieser Wechselspannungsgenerator, der insbesondere als Niederfrequenzgenerator ausgebildet ist, ermöglicht, das eine nieder- bis hochfrequente kleine Wechselspannung zwischen dem Fühler und einer Elektrode einer elektrochemischen Zelle der Batterie angelegt werden kann. Durch den Wechselspannungsgenerator kann die angelegte Wechselspannung so ausgelegt werden, dass eine Wechselspannungsamplitude zwischen dem Fühler und der Elektrode, und damit dem Elektrolyten, von nur wenigen Millivolt vorliegt. Ferner kann die Versorgung der elektrochemischen Zelle beziehungsweise der Batterie mit Wechselspannung so hochohmig gestaltet werden, dass der Strom im Kontaktfall auf wenige Milliampere begrenzt ist. Der Wechselspannungsgenerator ermöglicht, dass eine derartige Frequenz für die Wechselspannung gewählt werden kann, dass eine elektrochemische Beeinflussung der zumindest einen elektrochemischen Zelle unterbleibt. Vorzugsweise kann für die Vorrichtung zur Feststellung des Elektrolytfüllstandes wenigstens einer elektrochemischen Zelle einer Batterie mit einem flüssigen Elektrolyten eine Netzspannung, insbesondere mit einer Frequenz von 50 oder 60 Hz, genutzt werden, wodurch sich der Wechselspannungsgenerator erübrigt und der Aufwand und die Kosten reduziert werden können.

Bevorzugt ist ferner eine Vorrichtung zur Feststellung des Elektrolytfüllstandes wenigstens einer elektrochemischen Zelle einer Batterie, wobei in der wenigstens einen elektrochemischen Zelle ein flüssiger Elektrolyt vorgesehen ist, bei der die erste Einrichtung zur galvanischen Trennung und die zweite Einrichtung zur galvanischen Trennung jeweils zur induktiven oder kapazitiven Entkopplung der erzeugten Wechselspannung von der wenigstens einen elektrochemischen Zelle ausgebildet sind.

Gemäß einer besonders bevorzugten Weiterentwicklung der Erfindung kann bei der Vorrichtung vorgesehen sein, dass die erste Einrichtung zur galvanischen Trennung einen Transformator und die zweite Einrichtung zur galvanischen Trennung einen Transformator aufweist. Transformatoren eignen sich neben der galvanischen Trennung von Stromnetzen besonders gut zur Wechselspannungsanpassung, das heißt zur Reduzierung oder Erhöhung einer Wechselspannung. Dies wird bei Transformatoren durch zwei elektrisch voneinander getrennte Spulen, die sich auf einem gemeinsamen Eisenkern befinden, realisiert. So ermöglicht beispielsweise der erste Transformator der Vorrichtung, dass keine Hochspannung zwischen dem zumindest einen Fühler und der Elektrode einer elektrochemischen Zelle der Batterie anliegt, wenn durch einen Defekt in der Wechselspannungserzeugungseinrichtung eine hohe Wechselspannung beziehungsweise Überspannung vorherrscht. Im Sinne der Erfindung wird unter einem Transformator ein Übertrager verstanden, da die Transformatoren der Vorrichtung zur Übertragung von Signalen, insbesondere von Wechselspannungssignalen, ausgebildet sind.

Gemäß einer anderen bevorzugten Weiterentwicklung der Erfindung kann bei der Vorrichtung vorgesehen sein, dass die erste Einrichtung zur galvanischen Trennung wenigstens zwei Kondensatoren und die zweite Einrichtung zur galvanischen Trennung wenigstens zwei Kondensatoren aufweist. Die wenigstens zwei Kondensatoren auf jeder Seite des Fühlers und der elektrischen Anschlusseinrichtung beziehungsweise der Elektrode der elektrochemischen Zelle ermöglichen, dass über eine so genannte Ladungsverschiebung Signale, insbesondere Wechselspannungssignale, übertragen werden können.

Besonders bevorzugt ist ferner eine Vorrichtung, bei der die Wechselspannungserzeugungseinrichtung zur Erzeugung einer Wechselspannung mit einer Frequenz in einem Bereich von 40Hz bis 20kHz ausgebildet ist. Bei einer derartigen Frequenz der Wechselspannung unterbleibt eine elektrochemische Beeinflussung der elektrochemischen Zelle beziehungsweise der Batterie bei der Überprüfung des Füllstandes des Elektrolyten der elektrochemischen Zelle durch die erfindungsgemäße Vorrichtung.

Gemäß einer weiteren bevorzugten Weiterentwicklung der Erfindung kann bei der Vorrichtung vorgesehen sein, dass die erste Einrichtung zur galvanischen Trennung zur Reduzierung der Wechselspannung auf einen Amplitudenwert zwischen 1mV und 1V ausgebildet ist. Hierdurch liegt zwischen dem wenigstens einen Fühler und der als Gegenpol dienenden Elektrode der elektrochemischen Zelle nur eine geringe Wechselspannungsamplitude an. Somit ist auch der durch den zumindest einen Fühler und den Elektrolyten der elektrochemischen Zelle fließende Wechselstrom sehr gering. Der Wechselstrom ist dadurch auf wenige Milliampere begrenzt. Daher ist bei der Verwendung eines elektrochemisch inerten Materials für den wenigstens einen Fühler das sich einstellende Potenzial für die Feststellung des Elektrolytfüllstandes durch die Vorrichtung ohne Bedeutung, da das von der Schnittstelle zum Auslesen der Wechselspannung kommende Wechselspannungssignal im Falle des abgesunkenen Elektrolytstands über die zweite Einrichtung zur galvanischen Trennung weitergegeben wird. Im Falle des Kurzschlusses durch Kontakt des zumindest einen Fühlers mit dem Elektrolyten der elektrochemischen Zelle der Batterie ist das Potenzial des zumindest einen Fühlers nicht von Interesse, da es sich bei der Potentialdifferenz zu der Elektrode der elektrochemischen Zelle um eine Gleichspannung handelt, die durch die zweite Einrichtung zur galvanischen Trennung nicht transformiert wird.

Gemäß einer weiteren bevorzugten Weiterentwicklung der Erfindung kann bei der Vorrichtung vorgesehen sein, dass zwischen der zweiten Einrichtung zur galvanischen Trennung und der Schnittstelle eine Verstärkerschaltung zur Erhöhung der Wechselspannung vorgesehen ist. Die Verstärkerschaltung ist so dimensioniert, dass das von der zweiten Einrichtung zur galvanischen Trennung weitergeleitete Wechselspannungssignal an dem Eingang der Verstärkerschaltung eine sicherere Erkennung des Zellzustands, das heißt des Elektrolytfüllstandes der elektrochemischen Zelle, ermöglicht. Die zweite Einrichtung zur galvanischen Trennung dient daher neben der galvanischen Trennung zur Gewinnung eines Ausgangsspannungssignals, welches an die Verstärkerschaltung weitergeleitet wird, die mit einem auswertbaren Ausgang, das heißt der Schnittstelle zum Auslesen der vorhandenen Wechselspannung, verbunden ist. Wenn der zumindest eine Fühler in Kontakt mit dem Elektrolyten der elektrochemischen Zelle ist, wird die Sekundärseite der ersten Einrichtung zur galvanischen Trennung und die Primärseite der zweiten Einrichtung zur galvanischen Trennung kurzgeschlossen, wodurch am Eingang der Verstärkerschaltung keine Wechselspannung beziehungsweise kein verändertes Wechselspannungssignal anliegt, was über die Schnittstelle in geeigneter Weise ausgelesenen werden kann. Die Verstärkerschaltung wird von einer externen Stromversorgung, das heißt einer vom Netz der elektrochemischen Zelle getrennten Stromversorgung, betrieben.

Der zumindest eine Fühler der Vorrichtung ist vorzugsweise aus einem inerten Material ausgebildet. Hierdurch wird insbesondere vermieden, dass der zumindest eine Fühler mit dem Elektrolyten oder dem Gas, insbesondere der Luft, oberhalb des Elektrolyten reagiert. Bevorzugt ist des Weiteren daher eine Vorrichtung zur Feststellung des Elektrolytfüllstandes wenigstens einer elektrochemischen Zelle einer Batterie mit einem flüssigen Elektrolyten, bei der die Batterie als eine alkalische Batterie ausgebildet ist und der zumindest eine Fühler zumindest bereichsweise aus Graphit, einem leitenden Polymer, Nickel, vernickeltem Metall, Edelstahl, ausgebildet ist oder bei der die Batterie als Blei-Säure-Batterie ausgebildet ist und der zumindest eine Fühler aus Graphit, einem leitendem Polymer, Blei, bleiummantelten oder verbleitem Metall ausgebildet ist. Durch die Verwendung derartiger Materialien für den Fühler wird vermieden, dass der zumindest eine Fühler mit einem ihn umgebenden Reaktionspartner reagiert, beispielsweise oxidiert.

Gemäß einer weiteren vorteilhaften Ausgestaltung der Vorrichtung kann bei dieser vorgesehen sein, dass eine Anzeigeeinrichtung zur Anzeige des ausgelesenen Wechselspannungssignals beziehungsweise zur Anzeige einer Veränderung der Wechselspannung nach der Schnittstelle vorgesehen ist. Die Anzeigeeinrichtung ermöglicht die Anzeige einer Veränderung der zwischen dem wenigstens einen Fühler und der Elektrode anliegenden Wechselspannung, im Falle, dass der Kurzschluss zwischen dem zumindest einen Fühler und dem Elektrolyten unterbrochen wird. Dabei ist es nicht unbedingt erforderlich, dass die Anzeigeeinrichtung die exakte Stärke der Wechselspannung anzeigt. Es reicht, dass die Anzeigeeinrichtung eine Veränderung der Wechselspannung anzeigt.

Insbesondere durch eine Kombination mit der Verstärkerschaltung kann an der Anzeigeeinrichtung das Vorliegen eines Kurzschlusses zwischen dem wenigstens einen Fühler und dem Elektrolyten oder das Vorliegen eines offenen Kontaktzustandes sicher angezeigt werden.

Der zumindest eine Fühler der Vorrichtung zur Feststellung des Elektrolytfüllstandes wenigstens einer elektrochemischen Zelle einer Batterie mit einem flüssigen Elektrolyten ist vorzugsweise verstellbar ausgebildet. Hierdurch kann der Fühler relativ zum Elektrolyten beziehungsweise zur Elektrolytoberfläche angeordnet werden.

Gemäß einem zweiten Aspekt der Erfindung wird die Aufgabe durch eine Batterie mit wenigstens einer elektrochemischen Zelle mit einem flüssigem Elektrolyten gelöst, wobei die wenigstens eine elektrochemische Zelle wenigstens eine Vorrichtung zur Feststellung des Elektrolytfüllstandes der wenigstens einen elektrochemischen Zelle aufweist. Im Sinne der Erfindung kann die elektrochemische Zelle eine Batterie mit einer oder mehreren elektrochemischen Zellen sein.

Eine Batterie mit wenigstens einer derartigen Vorrichtung zur Feststellung des Elektrolytfüllstandes wenigstens einer elektrochemischen Zelle der Batterie ermöglicht eine einfache und sichere Erkennung eines ausreichenden beziehungsweise nicht ausreichenden Füllstandes des flüssigen Elektrolyten in der wenigstens einen elektrochemischen Zelle der Batterie. Die elektrochemische Zelle beziehungsweise die Batterie kann durch eine derartige Vorrichtung dauerhaft auf Funktionstüchtigkeit überprüft werden, insbesondere kann genau festgestellt werden, wann der Stand des flüssigen Elektrolyten eine kritische Höhe unterschreitet. Die Vorrichtung zur Feststellung des Elektrolytfüllstandes der elektrochemischen Zelle ermöglicht, dass rechtzeitig Elektrolytflüssigkeit nachgefüllt werden kann, bevor die elektrochemische Zelle und damit die Batterie aufgrund von zu wenig Elektrolytflüssigkeit Schaden nimmt.

Gemäß einem dritten Aspekt der Erfindung wird die Aufgabe durch ein Verfahren zur Feststellung des Elektrolytfüllstandes wenigstens einer elektrochemischen Zelle einer Batterie mit einem flüssigen Elektrolyten gelöst, wobei das Verfahren durch folgende Verfahrensschritte gekennzeichnet ist:
a) über eine Wechselspannungserzeugungseinrichtung wird eine Wechselspannung erzeugt,
b) die erzeugte Wechselspannung wird über eine erste Einrichtung zur galvanischen Trennung galvanisch von der wenigstens einen elektrochemischen Zelle getrennt und die Wechselspannung wird durch die erste Einrichtung zur galvanischen Trennung verringert,
c) die verringerte Wechselspannung wird an zumindest einen Fühler aus einem inerten Material und über zumindest eine elektrische Anschlusseinrichtung an eine Elektrode der wenigstens einen elektrochemischen Zelle angelegt, wobei der zumindest eine Fühler und die Elektrode in Kontakt zum Elektrolyten der
   wenigstens einen elektrochemischen Zelle stehen, so dass ein Kurzschluss entsteht, wobei der zumindest eine Fühler und die zumindest eine elektrische Anschlusseinrichtung parallel geschaltet zur ersten Einrichtung zur galvanischen Trennung angeordnet sind,
d) eine dem zumindest einen Fühler und der zumindest einen elektrischen Anschlusseinrichtung parallel nachgeschaltete zweite Einrichtung zur galvanischen Trennung trennt die wenigstens eine elektrochemische Zelle galvanisch von der parallel nachgeschalteten Schnittstelle zum Auslesen der Wechselspannung und erhöht die Wechselspannung,
e) über die Schnittstelle zum Auslesen einer an der zweiten Einrichtung zur galvanischen Trennung anliegenden Wechselspannung oder eines an die zweite Einrichtung zur galvanischen Trennung transformierten Wechselspannungssignals wird eine Veränderung der Wechselspannung festgestellt, wenn der zumindest eine Fühler nicht mehr in Kontakt zum Elektrolyten der wenigstens einen elektrochemischen Zelle steht.

Durch ein derartiges Verfahren kann auf eine einfache und für die elektrochemische(n) Zelle(n) der Batterie unbedenkliche Art und Weise festgestellt werden, ob der Füllstand des flüssigen Elektrolyten in der elektrochemischen Zelle beziehungsweise den elektrochemischen Zellen der Batterie ausreichend beziehungsweise nicht ausreichend ist. Das Verfahren ermöglicht ein sofortiges Erkennen, wenn der Elektrolytspiegel in der elektrochemischen Zelle unterhalb einer kritischen Höhe absinkt. Durch das Verfahren kann rechtzeitig Elektrolytflüssigkeit in die elektrochemische Zelle beziehungsweise in die elektrochemischen Zellen einer Batterie nachgefüllt werden.

Bei dem Verfahren zur Feststellung des Elektrolytfüllstandes wenigstens einer elektrochemischen Zelle einer Batterie mit einem flüssigen Elektrolyten wird zunächst eine Wechselspannung erzeugt. Dabei wird die Wechselspannung durch eine Wechselspannungserzeugungseinrichtung erzeugt. Die Wechselspannungserzeugungseinrichtung kann beispielsweise das allgemeine Stromnetz sein, welches insbesondere eine Netzfrequenz von beispielsweise 50 oder 60 Hz aufweist. Vorteilhafterweise weist die Wechselspannungserzeugungseinrichtung einen Wechselspannungsgenerator, insbesondere einen Niederfrequenzgenerator, auf, der die erforderliche Wechselspannung erzeugt. Der Wechselspannungsgenerator kann eine derartige Wechselspannung anlegen, dass eine Wechselspannungsamplitude zwischen dem Fühler und der Elektrode, und damit dem Elektrolyten, von nur wenigen Millivolt vorliegt. Ferner wird die angelegte Wechselspannung so hochohmig gestaltet, dass der Strom im Kontaktfall auf wenige Milliampere begrenzt ist. Das heißt, der Wechselspannungsgenerator ermöglicht das Anlegen einer Wechselspannung mit einer derartigen Frequenz, dass eine elektrochemische Beeinflussung der zumindest einen elektrochemischen Zelle der Batterie unterbleibt.

Die erzeugte Wechselspannung wird über eine erste Einrichtung zur galvanischen Trennung galvanisch von der wenigstens einen elektrochemischen Zelle getrennt und die Wechselspannung wird durch die erste Einrichtung zur galvanischen Trennung verringert. Die erste Einrichtung zur galvanischen Trennung trennt also das äußere Stromnetz, das heißt die Wechselspannungserzeugungseinrichtung, galvanisch von dem Stromnetz der elektrochemischen Zelle beziehungsweise dem Batteriezweig. Ferner reduziert die erste Einrichtung zur galvanischen Trennung die von der Wechselspannungserzeugungseinrichtung erzeugte Wechselspannung nochmals, so dass eine Wechselspannungsamplitude mit nur wenigen Millivolt zwischen dem zumindest einen Fühler und der Elektrode der elektrochemischen Zelle beziehungsweise der Elektrolytoberfläche vorliegt.

Der zumindest eine Fühler und die zumindest eine elektrische Anschlusseinrichtung werden parallel geschaltet zur ersten Einrichtung zur galvanischen Trennung angeordnet. Über die erste Einrichtung zur galvanischen Trennung wird die verringerte beziehungsweise reduzierte Wechselspannung an den zumindest einen Fühler aus einem inerten Material und über zumindest eine elektrische Anschlusseinrichtung an eine Elektrode der wenigstens einen elektrochemischen Zelle angelegt, wobei der zumindest eine Fühler und die Elektrode in Kontakt zum Elektrolyten der wenigstens einen elektrochemischen Zelle der Batterie stehen. Durch den Kontakt des zumindest einen Fühlers mit dem Elektrolyten und der zumindest einen elektrischen Anschlusseinrichtung mit der Elektrode der elektrochemischen Zelle erfolgt beim Anlegen der kleinen Wechselspannung ein Kurzschluss.

Eine dem zumindest einen Fühler und der zumindest einen elektrischen Anschlusseinrichtung parallel nachgeschaltete zweite Einrichtung zur galvanischen Trennung trennt die wenigstens eine elektrochemische Zelle galvanisch von der parallel nachgeschalteten Schnittstelle zum Auslesen der Wechselspannung und erhöht die Wechselspannung, vorzugsweise auf Ihren Ausgangswert. Bei Vorliegen eines Kurzschlusses sinkt die Wechselspannung auf null, so dass an den Ausgängen der zweiten Einrichtung zur galvanischen Trennung keine Wechselspannung anliegt. So kann über die der zweiten Einrichtung zur galvanischen Trennung parallel nachgeschalteten Schnittstelle zum Auslesen der Wechselspannung ausgelesen werden, dass keine Wechselspannung zwischen dem zumindest einen Fühler und der Elektrode der überwachten elektrochemischen Zelle der Batterie anliegt.

Sinkt während des Betriebes der Batterie der Elektrolytspiegel in der überwachten elektrochemischen Zelle, kommt es irgendwann dazu, dass der zumindest eine Fühler keinen Kontakt mehr zu dem Elektrolyten hat. Sobald der zumindest eine Fühler keinen Kontakt mehr zu dem Elektrolyten hat, wird der Kurschluss unterbrochen und die zweite Einrichtung zur galvanischen Trennung überträgt die vorherrschende Wechselspannung beziehungsweise ein verändertes Wechselspannungssignal zu der Schnittstelle. Die Schnittstelle ermöglicht das Auslesen der veränderten Wechselspannung beziehungsweise des veränderten Wechselspannungssignals, so dass festgestellt werden kann, dass der Betriebszustand beziehungsweise die Funktionsfähigkeit der elektrochemischen Zelle und damit der Batterie nicht mehr voll gegeben ist beziehungsweise einen kritischen Wert unterschritten hat.

Die zweite Einrichtung zur galvanischen Trennung trennt die elektrochemische Zelle beziehungsweise das Stromnetz der elektrochemischen Zelle von der der zweiten Einrichtung zur galvanischen Trennung nachgeschalteten Schnittstelle zum Auslesen der zwischen dem zumindest einen Fühler und der Elektrode anliegenden Wechselspannung. Das Erhöhen der zwischen dem Fühler und der Elektrode vorherrschenden Wechselspannung durch die zweite Einrichtung zur galvanischen Trennung ermöglicht ein einfacheres Auslesen einer Veränderung der Wechselspannung zwischen dem zumindest einen Fühler und der Elektrode in dem Elektrolyten.

Sämtliche Bauteile außerhalb der elektrochemischen Zelle, das heißt, beispielsweise die Wechselspannungserzeugungseinrichtung beziehungsweise der Wechselspannungsgenerator oder die Schnittstelle zum Auslesen der Wechselspannung bzw. des Wechselspannungssignals sind durch die erste und zweite Einrichtung zur galvanischen Trennung galvanisch von der zumindest einen elektrochemischen Zelle beziehungsweise der Batterie getrennt und werden von zumindest einer externen Stromversorgung beziehungsweise zumindest einer externen Spannungsversorgung betrieben.

Der nach dem Wegfall des Kurzschlusses auftretende Wechselstrom beeinflusst die überwachte elektrochemische Zelle der Batterie überhaupt nicht, so dass diese keinen Schaden nimmt. Der geringe fließende Wechselstrom lädt die zumindest eine elektrochemische Zelle vorteilhafterweise nicht.

Das zuvor geschilderte Verfahren kann bei einer oder mehreren elektrochemischen Zellen einer Batterie, insbesondere bei Blei-Säure-Batterien oder alkalischen Batterien, durchgeführt werden.

Bevorzugt ist ferner ein derartiges Verfahren, bei dem die Wechselspannungserzeugungseinrichtung eine Wechselspannung mit einer Frequenz in einem Bereich von 40Hz bis 20kHz erzeugt. Bei einer derartigen Frequenz unterbleibt eine negative elektrochemische Beeinflussung der wenigstens einen elektrochemischen Zelle einer Batterie.

Ferner ist vorteilhaft, wenn die erste Einrichtung zur galvanischen Trennung die Wechselspannung auf einen Amplitudenwert zwischen 1mV und 1V reduziert. Das heißt, vorteilhafterweise wird die an dem zumindest einen Fühler anliegende Wechselspannung durch eine induktive oder kapazitive Entkopplung mittels der ersten Einrichtung zur galvanischen Trennung auf einen Amplitudenwert kleiner 1V, insbesondere einen Amplitudenwert im Bereich zwischen 1mV bis 1V, eingestellt. Dies ermöglicht, dass zwischen dem wenigstens einen Fühler und der als Gegenpol dienenden Elektrode der elektrochemischen Zelle nur eine geringe Wechselspannungsamplitude und nur ein sehr geringer Wechselstrom anliegen. Der Wechselstrom ist dadurch auf wenige Milliampere begrenzt. Im Falle des Kurzschlusses durch Kontakt des zumindest einen Fühlers mit dem Elektrolyten der elektrochemischen Zelle ist das Potenzial des zumindest einen Fühlers nicht von Interesse, da es sich bei der Potenzialdifferenz zu der Elektrode der elektrochemischen Zelle um eine Gleichspannung handelt, die durch die zweite Einrichtung zur galvanischen Trennung nicht transformiert wird.

Bevorzugt ist ferner bei dem Verfahren, wenn bei Vorliegen einer Wechselspannung zwischen dem zumindest einen Fühler und der Elektrode der wenigstens einen elektrochemischen Zelle die zweite Einrichtung zur galvanischen Trennung die Wechselspannung zu der Schnittstelle zum Auslesen induktiv oder kapazitiv weiterleitet. Hierdurch wird gewährleistet, dass das Stromnetz der elektrochemischen Zelle beziehungsweise das Stromnetz der Batterie von dem äußeren Stromnetz getrennt bleibt und durch dieses nicht negativ beeinflusst wird.

Bevorzugt ist ferner, wenn anstelle der Elektrode wenigstens ein zweiter Fühler verwendet wird. Das bedeutet, es können auch zwei Fühler vorgesehen werden, die so zwischen der ersten und der zweiten Einrichtung zur galvanischen Trennung geschaltet sind, dass zwischen diesen eine Wechselspannung angelegt werden kann. Solange beide Fühler in Kontakt zu dem Elektrolyten stehen besteht beim Anliegen einer Wechselspannung ein Kurzschluss. Sobald einer der Fühler nicht mehr in Kontakt zu dem Elektrolyten steht, fließt zwischen den beiden Fühlern eine Wechselspannung. Diese Veränderung der Wechselspannung zwischen den beiden Fühlern dient als Anzeichen dafür, dass der Elektrolytspiegel der zumindest einen überwachten elektrochemischen Zelle der Batterie nicht mehr ausreichend ist, so dass entweder die Batterie ausgetauscht werden kann oder Elektrolytflüssigkeit, beispielsweise destilliertes Wasser, nachgefüllt werden kann.

Bevorzugt wird die Veränderung der Wechselspannung zwischen dem zumindest einen Fühler und der Elektrode beziehungsweise zwischen zwei Fühlern über die zweite Einrichtung zur galvanischen Trennung und die Schnittstelle zu einer Anzeigeeinrichtung weitergeleitet, die die Veränderung der Wechselspannung anzeigt. Hierdurch kann der Zustand der elektrochemischen Zelle beziehungsweise der Batterie leicht erkannt und entsprechende Maßnahmen durchgeführt werden.

Gemäß einer bevorzugten Weiterentwicklung der Erfindung kann bei dem Verfahren vorgesehen sein, dass zur Durchführung des Verfahrens eine Vorrichtung gemäß dem ersten Aspekt der Erfindung verwendet wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Figur 1: einen möglichen Aufbau einer elektrochemischen Zelle einer Batterie, bei der der Fühler einer erfindungsgemäßen Vorrichtung in Kontakt zum Elektrolyten steht,
- Figur 2: die elektrochemische Zelle gemäß Fig. 1, wobei der Fühler nicht in Kontakt zum Elektrolyten steht,
- Figur 3: eine erste Ausführungsvariante der Vorrichtung zur Feststellung des Elektrolytfüllstandes wenigstens einer elektrochemischen Zelle einer Batterie mit einem flüssigen Elektrolyten, die nach dem erfindungsgemäßen Konstruktionsprinzip ausgebildet ist,
- Figur 4: eine zweite Ausführungsvariante der Vorrichtung zur Feststellung des Elektrolytfüllstandes wenigstens einer elektrochemischen Zelle einer Batterie mit einem flüssigen Elektrolyten, die nach dem erfindungsgemäßen Konstruktionsprinzip ausgebildet ist.

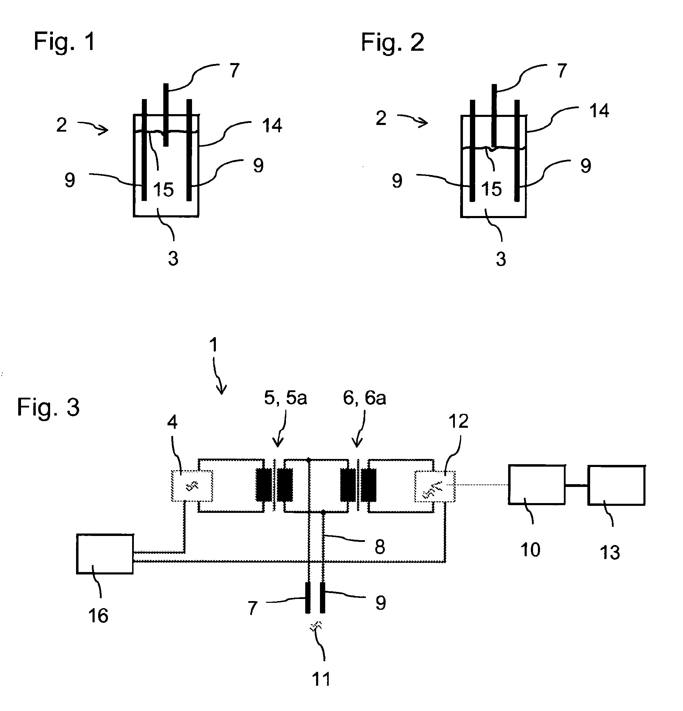

Elemente mit gleicher Funktion und Wirkungsweise sind in den Figuren 1 bis 4 jeweils mit denselben Bezugszeichen versehen.

Fig. 1 zeigt einen möglichen Aufbau einer elektrochemischen Zelle 2 einer Batterie, wobei der Fühler 7 einer Vorrichtung 1 zur Feststellung des Elektrolytfüllstandes wenigstens einer elektrochemischen Zelle 2 einer Batterie in Kontakt zum Elektrolyten 3 der elektrochemischen Zelle 2 steht. Fig. 2 zeigt die elektrochemische Zelle 2 gemäß Fig. 1, wobei der Fühler 7 einer Vorrichtung 1 zur Feststellung des Elektrolytfüllstandes wenigstens einer elektrochemischen Zelle 2 einer Batterie nicht in Kontakt zum Elektrolyten 3 der elektrochemischen Zelle 2 der Batterie steht. Die in den Fig. 1 und 2 dargestellt elektrochemische Zelle 2 weist ein Gehäuse 14 auf, in der der Elektrolyt 3 angeordnet ist. Die elektrochemische Zelle 2 weist ferner zwei Elektroden 9 auf. Der Fühler 7 ist in Fig. 1 so justiert, dass er in den Elektrolyten 3 der elektrochemischen Zelle 2 eintaucht beziehungsweise mit dem Elektrolyten 3 in Kontakt steht. Eine der Elektroden 9 der elektrochemischen Zelle 2 ist über die elektrische Anschlusseinrichtung 8 der Vorrichtung 1 mit dieser verbunden. Das heißt, eine der beiden Elektroden 9 der elektrochemischen Zelle 2 dient als Gegenpol zu dem Fühler 7 der Vorrichtung 1.

Wird über die Vorrichtung 1 zur Feststellung des Elektrolytfüllstandes wenigstens einer elektrochemischen Zelle 2 einer Batterie eine Wechselspannung erzeugt und diese zu dem Fühler 7 und der Elektrode 9 weitergeleitet, so erfolgt ein Kurzschluss, wenn, wie in Fig. 1 dargestellt, der Fühler 7 in Kontakt zu dem Elektrolyten 3 der elektrochemischen Zelle 2 der Batterie steht. Sinkt nach einem längeren Betrieb der Batterie die Elektrolytoberfläche 15, das heißt der Elektrolytspiegel, in der überwachten elektrochemischen Zelle unter eine bestimmte Höhe ab, so steht der Fühler der Vorrichtung 1 nicht mehr in Kontakt zu dem Elektrolyten 3 der elektrochemischen Zelle 2, wie in Fig. 2 dargestellt. Hierdurch wird der Kurzschluss unterbrochen und eine Wechselspannung, die von der Vorrichtung 1 erzeugt wird, kann fließen.

Fig. 3 zeigt eine erste Ausführungsvariante der Vorrichtung 1 zur Feststellung des Elektrolytfüllstandes wenigstens einer elektrochemischen Zelle 2 einer Batterie mit einem flüssigen Elektrolyten 3, die nach dem erfindungsgemäßen Konstruktionsprinzip ausgebildet ist. In einer Wechselspannungserzeugungseinrichtung 4, die vorzugsweise einen Wechselspannungsgenerator umfasst oder als Wechselspannungsgenerator ausgebildet ist, wird eine Wechselspannung mit einer bestimmten Frequenz erzeugt. Die Frequenz wird dabei derart gewählt, dass eine elektrochemische Beeinflussung der elektrochemischen Zelle 2 der Batterie unterbleibt. Das ist vorzugsweise im Frequenzbereich von 40 Hz bis 20 kHz der Fall. Vorzugsweise kann auch eine Netzfrequenz einer Spannungsversorgung/Stromversorgung 16, von beispielsweise 50 Hz o. 60 Hz, genutzt werden, wodurch kein Wechselspannungsgenerator erforderlich ist und sich der Aufwand der Vorrichtung 1 verringert. Das heißt, in einem derartigen Fall bildet die Spannungsversorgung/Stromversorgung 16 die Wechselspannungserzeugungseinrichtung 4. Die erste Einrichtung 5 zur galvanischen Trennung, die in Fig. 3 als Transformator 5a ausgebildet ist, dient der galvanischen Trennung und verringert die Amplitude der Wechselspannung auf Werte zwischen 1 mV und 1 V. Parallel zu den Ausgängen des Transformators 5a ist eine gleichwertige zweite Einrichtung 6 zur galvanischen Trennung, die in Fig. 3 als zum ersten Transformator 5a gleichwertiger Transformator 6a ausgebildet ist, angeschlossen. Ebenfalls parallel zu der ersten und zweiten Einrichtung 5, 6 zur galvanischen Trennung beziehungsweise den Transformatoren 5a, 6a sind der Fühler 7 und über die elektrische Anschlusseinrichtung 8 eine Elektrode 9, das heißt ein Pol, der zu überwachenden elektrochemischen Zelle 2 der Batterie kontaktiert. Die zweite Einrichtung 6 zur galvanischen Trennung beziehungsweise der zweite Transformator 6a dient der galvanischen Trennung und der Gewinnung eines Ausgangsspannungssignals. Das Ausgangsspannungssignals der Wechselspannung zwischen dem Fühler 7 und der Elektrode 9 der elektrochemischen Zelle 2 wird über die zweite Einrichtung 6 zur galvanischen Trennung beziehungsweise den zweiten Transformator 6a zu einer parallel nachgeschalteten Verstärkerschaltung 12 übertragen. Die Verstärkerschaltung 12 ist optional und dient zur Erhöhung der festgestellten Wechselspannung bzw. zur Erhöhung eines Wechselspannungssignals. Der Ausgang der zweiten Einrichtung 6 zur galvanischen Trennung beziehungsweise des zweiten Transformators 6a ist über die zwischengeschaltete Verstärkerschaltung 12 mit einer Schnittstelle 10 zum Auslesen der festgestellten Wechselspannung 11 bzw. des festgestellten Wechselspannungssignals verbunden.

Wenn der Fühler 7 den Elektrolyten 3 berührt, wird die Sekundärseite der ersten Einrichtung 5 zur galvanischen Trennung beziehungsweise des ersten Transformators 5a und die Primärseite der zweiten Einrichtung 6 zur galvanischen Trennung beziehungsweise des zweiten Transformators 6a kurzgeschlossen. Damit liegt am Verstärkereingang der Verstärkerschaltung 12 keine Spannung an, was über die Schnittstelle 10 zum Auslesen ausgelesen werden kann. Mit der Schnittstelle 10 ist eine Anzeigeeinrichtung 13 verbunden, über die die Veränderung der Wechselspannung 11 beziehungsweise des Wechselspannungssignals in geeigneter Weise angezeigt werden kann. Sinkt die Elektrolytoberfläche beziehungsweise der Elektrolytspiegel 15 des Elektrolyten 3 der überwachten elektrochemischen Zelle 2, so wird der Kurschluss unterbrochen und die am Verstärkereingang der Verstärkerschaltung 12 auftretende Wechselspannung führt zu einer Anzeige durch die an der Schnittstelle 10 angeschlossenen Anzeigeeinrichtung 13.

Sowohl die Wechselspannungserzeugungseinrichtung 4, insbesondere der Wechselspannungsgenerator, als auch die Verstärkerschaltung 12 sind durch die erste und zweite Einrichtung 5, 6 zur galvanischen Trennung beziehungsweise den ersten und zweiten Transformator 5a, 6a galvanisch von dem Stromnetz der elektrochemischen Zelle 2 beziehungsweise dem Netz der Batterie getrennt und werden durch eine oder mehrere externe Spannungsversorgung(en)/Stromversorgung(en) 16 betrieben. Die externe Spannungsversorgung/Stromversorgung 16 kann in bekannter Weise auch zusätzlich galvanisch von dem Netz der wenigstens einen elektrochemischen Zelle 2 beziehungsweise dem Batterienetz getrennt werden.

Die Wechselspannungserzeugungseinrichtung 4 und die erste und zweite Einrichtung 5, 6 zur galvanischen Trennung beziehungsweise der erste und zweite Transformator 5a, 6a werden so dimensioniert, dass zwischen dem Fühler 7 und der als Gegenpol dienenden Elektrode 9 der elektrochemischen Zelle 2 nur eine geringe Wechselspannungsamplitude anliegt und der durch den Fühler 7 und die elektrochemische Zelle 2 fließende Wechselstrom sehr gering ist und wenige Milliampere nicht überschreitet. Bei Verwendung eines elektrochemisch inerten Fühlermaterials ist das sich einstellende Potenzial für die Wirkung der Vorrichtung 1 zur Feststellung des Elektrolytfüllstandes der wenigstens einen elektrochemischen Zelle 2 ohne Bedeutung, da das von der Verstärkerschaltung 12 kommende Wechselspannungssignal im Falle des abgesunkenen Elektrolytstands über die zweite Einrichtung 6 zur galvanischen Trennung beziehungsweise den zweiten Transformator 6a weitergegeben wird. Im Falle des Kurzschlusses durch einen absinkenden Elektrolytlevel ist das Potenzial des Fühlers 7 nicht von Interesse, da es sich bei der Potenzialdifferenz zu der Elektrode 9 um eine Gleichspannung handelt, die durch die zweite Einrichtung 6 zur galvanischen Trennung beziehungsweise den zweiten Transformator 6a nicht transformiert wird.

Im Falle einer Batterie mit alkalischen Zellen ist der Fühler 7 der Vorrichtung 1 vorteilhafterweise beispielsweise aus Graphit, leitendem Polymer, Nickel, vernickeltem Metall oder Edelstahl ausgebildet. Für Bleibatterien kann der Fühler 7 vorteilhafterweise aus einem Bleistab oder -draht, einem bleiummantelten oder verbleiten Metall, Graphit oder leitendem Polymer ausgebildet sein.

Die Verstärkerschaltung 12 ist vorzugsweise so dimensioniert, dass das Wechselspannungssignal an ihrem Eingang eine sicherere Erkennung des Zellzustands der elektrochemischen Zelle 2 einer Batterie ermöglicht.

Vorteilhafterweise können durch die Vorrichtung 1 zur Feststellung des Elektrolytfüllstandes einer elektrochemischen Zelle 2 einer Batterie mit einem flüssigen Elektrolyten 3 durch die galvanische Trennung mehrere elektrochemische Zellen 2 der Batterie gleichzeitig überwacht werden. Hierbei kann eine Wechselspannungserzeugungseinrichtung 4 beziehungsweise ein Wechselspannungsgenerator zur Bereitstellung einer bestimmten Wechselspannung für mehrere elektrochemische Zellen 2 der Batterie verwendet werden. Ferner können mehrere Vorrichtungen 1 zur Feststellung des Elektrolytfüllstandes wenigstens einer elektrochemischen Zelle 2 einer Batterie mit einem flüssigen Elektrolyten 3 miteinander so verschaltet werden, dass nur ein gemeinsames Wechselspannungssignal zur Anzeige des Batteriezustandes genutzt werden kann.

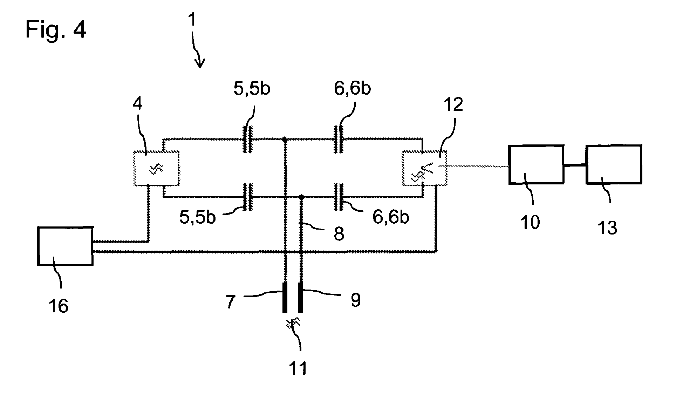

Fig. 4 zeigt einen ähnlichen Aufbau der Vorrichtung 1 zur Feststellung des Elektrolytfüllstandes einer elektrochemischen Zelle 2 einer Batterie mit einem flüssigen Elektrolyten 3 wie in Fig. 3 dargestellt. Die zu der Ausführungsvariante der Vorrichtung 1 gemäß Fig. 3 getätigten Ausführungen gelten ebenso bei dieser Ausführungsvariante, allerdings wird die galvanische Trennung nicht über Transformatoren 5a, 6a, sondern Kondensatorengruppen 5b, 6b bewirkt.

Eine derartige Vorrichtung 1, bei der die erste Einrichtung 5 zur galvanischen Trennung durch zwei Kondensatoren 5b und die zweite Einrichtung 6 zur galvanischen Trennung durch zwei Kondensatoren 6b gebildet sind, eignet sich bevorzugt für höhere Frequenzen, da der Widerstand der Kondensatoren 5b, 6b in diesem Fall klein wird und das Wechselspannungssignal leicht ein- bzw. ausgekoppelt werden kann. Der Vorteil dieser Ausführungsvariante der Vorrichtung 1 besteht darin, dass die Anordnung von umgebenen Magnetfeldern nicht beeinflusst wird. Die Spannungsversorgung 16 sollte hierbei eine galvanische Trennung von der Batterie aufweisen.

Allgemein löst die erfindungsgemäße Vorrichtung die gestellte Aufgabe dadurch, dass zwischen dem Fühler und der Elektrolyten eine nieder- bis hochfrequente kleine Wechselspannung angelegt wird, die im Falle des Elektrolytkontaktes des Fühlers kurzgeschlossen wird. Diese Wechselspannung wird galvanisch von der elektrochemischen Zelle, das heißt dem Batteriezweig, getrennt. Das Vorliegen der Wechselspannung im kontaktoffenen Zustand wird über eine parallel geschaltete Schnittstelle beziehungsweise eine Anzeigeeinrichtung, insbesondere einen Wechselspannungsindikator, die gleichfalls galvanisch vom Batteriezweig getrennt ist/sind, angezeigt.

Die galvanische Trennung erfolgt entweder über eine induktive oder über eine kapazitative Entkopplung zur elektrochemischen Zelle beziehungsweise zum Batteriezweig. Vorteilhafterweise wird die Versorgungsspannung, die durch die Wechselspannungserzeugungseinrichtung, insbesondere durch ein allgemeines Stromnetz oder einen Wechselspannungsgenerator, erzeugt wird, so ausgelegt, dass einerseits nur wenige Millivolt Wechselspannungsamplitude zwischen dem Fühler und dem Elektrolyten beziehungsweise der Elektrolytoberfläche vorliegen, zum anderen die Versorgung dieses Zweiges so hochohmig gestaltet ist, dass der Strom im Kontaktfall auf wenige Milliampere begrenzt ist. Durch die Verwendung von nieder, mittel- bzw. hochfrequentem Wechselstrom kann als Gegenpol zum Fühler jede Zellelektrode verwendet werden, da dadurch keine Faraday'schen Umsätze, wie bei einer Potenzialmessung oder Gleichspannungsanwendung, auftreten. Damit treten auch keine Veränderungen an dem Fühler, der als Sensorelektrode ausgebildet ist, auf, so dass ein zeitlich unbegrenzter Einsatz möglich wird, falls dieser Fühler aus einem inerten Material gefertigt ist.

Das Verfahren und die Vorrichtung sind sowohl für acide Elektrolyte, zum Beispiel bei Blei-Säure-Batterien, als auch für alkalische Batterien, beispielsweise Nickel/Cadmium-Batterien, Nickel/Metallhydrid-Batterien, Nickel/Zink-Batterien oder Zink/Luft-Batterien, geeignet. Im Falle der aciden Elektrolyte sollte der Fühler zumindest an der Spitze aus Blei- oder einer Bleilegierung bestehen. Für alkalische Batterien kann der Fühler aus einem Nickel oder oberflächlich vernickeltem Draht gefertigt werden. Es ist auch möglich, diesen aus einem korrosionsstabilen Stahl zu fertigen.

### Bezugszeichenliste

- 1: Vorrichtung zur Feststellung des Elektrolytfüllstandes wenigstens einer elektrochemischen Zelle
- 2: elektrochemische Zelle
- 3: Elektrolyt
- 4: Wechselspannungserzeugungseinrichtung
- 5: erste Einrichtung zur galvanischen Trennung
- 5a: Transformator
- 5b: Kondensator
- 6: zweite Einrichtung zur galvanischen Trennung
- 6a: Transformator
- 6b: Kondensator
- 7: Fühler
- 8: elektrische Anschlusseinrichtung
- 9: Elektrode
- 10: Schnittstelle zum Auslesen
- 11: Wechselspannung zwischen Fühler und Elektrode
- 12: Verstärkerschaltung
- 13: Anzeigeeinrichtung
- 14: Gehäuse der elektrochemischen Zelle
- 15: Elektrolytoberfläche
- 16: Spannungsversorgung/Stromversorgung

## Patentansprüche

1. Vorrichtung (1) zur Feststellung des Elektrolytfüllstandes wenigstens einer elektrochemischen Zelle (2) einer Batterie mit einem flüssigen Elektrolyten (3), aufweisend eine Wechselspannungserzeugungseinrichtung (4) zur Erzeugung einer Wechselspannung, eine erste Einrichtung (5) zur galvanischen Trennung der erzeugten Wechselspannung von der wenigstens einen elektrochemischen Zelle (2), wobei die erste Einrichtung (5) zur galvanischen Trennung zur Reduzierung der Wechselspannung ausgebildet ist, eine zweite Einrichtung (6) zur galvanischen Trennung der erzeugten Wechselspannung von der wenigstens einen elektrochemischen Zelle (2), wobei die zweite Einrichtung (6) zur galvanischen Trennung zur Erhöhung der Wechselspannung ausgebildet ist, wobei die zweite Einrichtung (6) zur galvanischen Trennung parallel geschaltet zur ersten Einrichtung (5) zur galvanischen Trennung angeordnet ist, aufweisend zumindest einen Fühler (7) aus einem inerten Material zum Kontaktieren des Elektrolyten (3) und zumindest eine elektrische Anschlusseinrichtung (8) zum Kontaktieren einer Elektrode (9) der wenigstens einen elektrochemischen Zelle (2), wobei der zumindest eine Fühler (7) und die zumindest eine elektrische Anschlusseinrichtung (8) zwischen der ersten und der zweiten Einrichtung (5, 6) zur galvanischen Trennung parallel geschaltet zu diesen angeordnet sind, und aufweisend eine der zweiten Einrichtung (6) zur galvanischen Trennung nachgeschaltete Schnittstelle (10) zum Auslesen einer zwischen dem zumindest einen Fühler (7) und der Elektrode (9) anliegenden veränderten Wechselspannung (11).

2. Vorrichtung (1) nach Anspruch 1, **dadurch gekennzeichnet, dass** die Wechselspannungserzeugungseinrichtung (4) einen Wechselspannungsgenerator aufweist.

3. Vorrichtung (1) nach wenigstens einem der vorhergehenden Ansprüche 1 oder 2, **dadurch gekennzeichnet, dass** die erste Einrichtung (5) zur galvanischen Trennung und die zweite Einrichtung (6) zur galvanischen Trennung zur induktiven oder kapazitiven Entkopplung der erzeugten Wechselspannung von der wenigstens einen elektrochemischen Zelle (2) ausgebildet sind.

4. Vorrichtung (1) nach wenigstens einem der vorhergehenden Ansprüche 1 bis 3, **dadurch gekennzeichnet, dass** die erste Einrichtung (5) zur galvanischen Trennung einen Transformator (5a) und die zweite Einrichtung (6) zur galvanischen Trennung einen Transformator (6a) aufweist.

5. Vorrichtung (1) nach wenigstens einem der vorhergehenden Ansprüche 1 bis 3, **dadurch gekennzeichnet, dass** die erste Einrichtung (5) zur galvanischen Trennung wenigstens zwei Kondensatoren (5b) und die zweite Einrichtung (6) zur galvanischen Trennung wenigstens zwei Kondensatoren (6b) aufweist.

6. Vorrichtung (1) nach wenigstens einem der vorhergehenden Ansprüche 1 bis 5, **dadurch gekennzeichnet, dass** die Wechselspannungserzeugungseinrichtung (4) zur Erzeugung einer Wechselspannung mit einer Frequenz in einem Bereich von 40Hz bis 20kHz ausgebildet ist.

7. Vorrichtung (1) nach wenigstens einem der vorhergehenden Ansprüche 1 bis 6, **dadurch gekennzeichnet, dass** die erste Einrichtung (5) zur galvanischen Trennung zur Reduzierung der Wechselspannung auf einen Amplitudenwert zwischen 1mV und 1V ausgebildet ist.

8. Vorrichtung (1) nach wenigstens einem der vorhergehenden Ansprüche 1 bis 7, **dadurch gekennzeichnet, dass** zwischen der zweiten Einrichtung (6) zur galvanischen Trennung und der Schnittstelle (10 eine Verstärkerschaltung (12) zur Erhöhung der Wechselspannung (11) vorgesehen ist.

9. Vorrichtung (1) nach wenigstens einem der vorhergehenden Ansprüche 1 bis 8, **dadurch gekennzeichnet, dass** die Batterie als eine alkalische Batterie ausgebildet ist und der zumindest eine Fühler (7) zumindest bereichsweise aus Graphit, einem leitenden Polymer, Nickel, vernickeltem Metall, Edelstahl, ausgebildet ist oder dass die Batterie als Blei-Säure-Batterie ausgebildet ist und der zumindest eine Fühler (7) aus Graphit, einem leitenden Polymer, Blei, bleiummantelten oder verbleitem Metall ausgebildet ist.

10. Vorrichtung (1) nach wenigstens einem der vorhergehenden Ansprüche 1 bis 9, **dadurch gekennzeichnet, dass** eine Anzeigeeinrichtung (13) zur Anzeige des ausgelesenen Wechselspannungssignals beziehungsweise zur Anzeige einer Veränderung der Wechselspannung (11) nach der Schnittstelle (10) vorgesehen ist.

11. Vorrichtung (1) nach wenigstens einem der vorhergehenden Ansprüche 1 bis 10, **dadurch gekennzeichnet, dass** der zumindest eine Fühler (7) verstellbar ist.

12. Batterie mit wenigstens einer elektrochemischen Zelle (2) mit einem flüssigen Elektrolyten (3), **dadurch gekennzeichnet, dass** die wenigstens eine elektrochemische Zelle (2) der Batterie wenigstens eine Vorrichtung (1) zur Feststellung des Elektrolytfüllstandes der wenigstens einen elektrochemischen Zelle (2) aufweist.

13. Verfahren (1) zur Feststellung des Elektrolytfüllstandes wenigstens einer elektrochemischen Zelle (2) einer Batterie mit einem flüssigen Elektrolyten (3), wobei das Verfahren durch folgende Verfahrensschritte gekennzeichnet ist:
a) über eine Wechselspannungserzeugungseinrichtung (4) wird eine Wechselspannung erzeugt,
b) die erzeugte Wechselspannung wird über eine erste Einrichtung (5) zur galvanischen Trennung galvanisch von der wenigstens einen elektrochemischen Zelle (2) getrennt und die Wechselspannung wird durch die erste Einrichtung (5) zur galvanischen Trennung verringert,
c) die verringerte Wechselspannung wird an zumindest einen Fühler (7) aus einem inerten Material und über zumindest eine elektrische Anschlusseinrichtung (8) an eine Elektrode (9) der wenigstens einen elektrochemischen Zelle (2) angelegt, wobei der zumindest eine Fühler (7) und die Elektrode (9) in Kontakt zum Elektrolyten (3) der wenigstens einen elektrochemischen Zelle (2) stehen, so dass ein Kurzschluss entsteht, wobei der zumindest eine Fühler (7) und die zumindest eine elektrische Anschlusseinrichtung (8) parallel geschaltet zur ersten Einrichtung (5) zur galvanischen Trennung angeordnet sind,
d) eine dem zumindest einen Fühler (7) und der zumindest einen elektrischen Anschlusseinrichtung (8) parallel nachgeschaltete zweite Einrichtung (6) zur galvanischen Trennung trennt die wenigstens eine elektrochemische Zelle (2) galvanisch von der parallel nachgeschalteten Schnittstelle (10) zum Auslesen der Wechselspannung und erhöht die Wechselspannung,
e) über die Schnittstelle (10) zum Auslesen einer an der zweiten Einrichtung (6) zur galvanischen Trennung anliegenden Wechselspannung oder eines an die zweite Einrichtung (6) zur galvanischen Trennung transformierten Wechselspannungssignals wird eine Veränderung der Wechselspannung (11) festgestellt, wenn der zumindest eine Fühler (7) nicht mehr in Kontakt zum Elektrolyten (3) der wenigstens einen elektrochemischen Zelle (2) steht.

14. Verfahren nach Anspruch 13, **dadurch gekennzeichnet, dass** die Wechselspannungserzeugungseinrichtung (4) eine Wechselspannung mit einer Frequenz in einem Bereich von 40Hz bis 20kHz erzeugt.

15. Verfahren nach wenigstens einem der vorhergehenden Ansprüche 13 oder 14, **dadurch gekennzeichnet, dass** die erste Einrichtung (5) zur galvanischen Trennung die Wechselspannung auf einen Amplitudenwert zwischen 1mV und 1V reduziert und/oder dass die an dem zumindest einen Fühler (7) anliegende Wechselspannung (11) durch eine induktive oder kapazitive Entkopplung mittels der ersten Einrichtung (5) zur galvanischen Trennung auf einen Amplitudenwert kleiner 1V, insbesondere einen Amplitudenwert im Bereich zwischen 1mV bis 1 V, eingestellt wird und/oder dass bei Vorliegen einer Wechselspannung zwischen dem zumindest einen Fühler (7) und der Elektrode (9) der wenigstens einen elektrochemischen Zelle (2) die zweite Einrichtung (6) zur galvanischen Trennung die Wechselspannung (11) zu der Schnittstelle (10) zum Auslesen induktiv oder kapazitiv weiterleitet und/oder dass anstelle der Elektrode (9) wenigstens ein zweiter Fühler (7) verwendet wird.

16. Verfahren nach wenigstens einem der vorhergehenden Ansprüche 13 bis 15, **dadurch gekennzeichnet, dass** eine Veränderung der Wechselspannung zwischen dem zumindest einen Fühler (7) und der Elektrode (9) über die zweite Einrichtung (6) zur galvanischen Trennung und die Schnittstelle (10) zu einer Anzeigeeinrichtung (13) weitergeleitet wird, die die Veränderung der Wechselspannung, (11) anzeigt.

17. Verfahren nach wenigstens einem der vorhergehenden Ansprüche 13 bis 16, **dadurch gekennzeichnet, dass** zur Durchführung des Verfahrens eine Vorrichtung (1) gemäß wenigstens einem der vorhergehenden Ansprüche 1 bis 11 verwendet wird.

## Claims

1. A device (1) for determining the electrolyte level of at least one electrochemical cell (2) of a battery with a liquid electrolyte (3), having an alternating voltage generating device (4) for generating an alternating voltage, a first device (5) for galvanic separation of the generated alternating voltage from the at least one electrochemical cell (2), wherein the first device (5) for galvanic separation is configured for the reducing of the alternating voltage, a second device (6) for galvanic separation of the generated alternating voltage from the at least one electrochemical cell (2), wherein the second device (6) for galvanic separation is configured for the increasing of the alternating voltage, wherein the second device (6) for galvanic separation is connected in parallel to the first device (5) for galvanic separation, having at least one sensor (7) of an inert material for contacting the electrolyte (3) and at least one electrical connection device (8) for contacting an electrode (9) of the at least one electrochemical cell (2), wherein the at least one sensor (7) and the at least one electrical connection device (8) are arranged between the first and the second device (5, 6) for galvanic separation connected in parallel thereto, and having an interface (10), downstream of the second device (6) for galvanic separation, for reading a changed alternating voltage (11) applied between the at least one sensor (7) and the electrode (9).

2. The device (1) according to claim 1, **characterized in that** the alternating voltage generating device (4) has an alternating voltage generator.

3. The device (1) according to at least one of the preceding claims 1 or 2, **characterized in that** the first device (5) for galvanic separation and the second device (6) for galvanic separation are constructed for inductive or capacitive decoupling of the generated alternating voltage from the at least one electrochemical cell (2).

4. The device (1) according to at least one of the preceding claims 1 to 3, **characterized in that** the first device (5) for galvanic separation has a transformer (5a) and the second device (6) for galvanic separation has a transformer (6a).

5. The device (1) according to at least one of the preceding claims 1 to 3, **characterized in that** the first device (5) for galvanic separation has at least two capacitors (5b) and the second device (6) for galvanic separation has at least two capacitors (6b).

6. The device (1) according to at least one of the preceding claims 1 to 5, **characterized in that** the alternating voltage generating device (4) for generating an alternating voltage is configured with a frequency in a range of 40Hz to 20kHz.

7. The device (1) according to at least one of the preceding claims 1 to 6, **characterized in that** the first device (5) for galvanic separation for reducing the alternating voltage is configured at an amplitude value between 1 mV and 1 V.

8. The device (1) according to at least one of the preceding claims 1 to 7, **characterized in that** between the second device (6) for galvanic separation and the interface (10) an amplifier circuit (12) is provided for increasing the alternating voltage (11).

9. The device (1) according to at least one of the preceding claims 1 to 8, **characterized in that** the battery is configured as an alkaline battery and the at least one sensor (7) is constructed at least partially from graphite, a conductive polymer, nickel, nickel-plated metal, high-grade steel, or that the battery is configured as a lead acid battery and the at least one sensor (7) is constructed from graphite, a conductive polymer, lead, metal covered with lead or lead-coated metal.

10. The device (1) according to at least one of the preceding claims 1 to 9, **characterized in that** a display device (13) is provided for displaying the read alternating voltage signals or respectively for displaying a change in the alternative voltage (11) after the interface (10).

11. The device (1) according to at least one of the preceding claims 1 to 10, **characterized in that** the at least one sensor (7) is adjustable.

12. A battery with at least one electrochemical cell (2) with a liquid electrolyte (3), **characterized in that** the at least one electrochemical cell (2) of the battery has at least one device (1) for determining the electrolyte level of the at least one electrochemical cell (2).

13. A method (1) for determining the electrolyte level at least of one electrochemical cell (2) of a battery with a liquid electrolyte (3), wherein the method is **characterized by** the following method steps:
a) an alternating voltage is generated by means of an alternating voltage generating device (4),
b) the generated alternating voltage is separated galvanically from the at least one electrochemical cell (2) by means of a first device (5) for galvanic separation and the alternating voltage is reduced by the first device (5) for galvanic separation,
c) the reduced alternating voltage is applied to at least one sensor (7) of an inert material and is applied by means of an electrical connection device (8) to an electrode (9) of the at least one electrochemical cell (2), wherein the at least one sensor (7) and the electrode (9) are in contact with the electrolyte (3) of the at least one electrochemical cell (2), so that a short-circuit occurs, wherein the at least one sensor (7) and the at least one electrical connection device (8) are arranged connected in parallel to the first device (5) for galvanic separation,
d) a second device (6) for galvanic separation, connected in parallel downstream of the at least one sensor (7) and of the at least one electrical connection device (8) separates the at least one electrochemical cell (2) galvanically from the interface (10), connected downstream in parallel, for reading the alternating voltage, and increases the alternating voltage,
e) a change in the alternating voltage (11) is determined by means of the interface (10) for reading an alternating voltage applied to the second device (6) for galvanic separation, or an alternating voltage signal transformed to the second device (6) for galvanic separation, when the at least one sensor (7) is no longer in contact with the electrolyte (3) of the at least one electrochemical cell (2).

14. The method according to claim 13, **characterized in that** the alternating voltage generating device (4) generates an alternating voltage with a frequency in a range of 40Hz to 20kHz.

15. The method according to at least one of the preceding claims 13 or 14, **characterized in that** the first device (5) for galvanic separation reduces the alternating voltage to an amplitude value between 1 mV and 1 V and/or that the alternating voltage (11) applied at the at least one sensor (7) is set by an inductive or capacitive decoupling by means of the first device (5) for galvanic separation to an amplitude value less than 1 V, in particular an amplitude value in the range between 1mV to 1 V and/or that with the presence of an alternating voltage between the at least one sensor (7) and the electrode (9) of the at least one electrochemical cell (2), the second device (6) for galvanic separation passes the alternating voltage (11) on to the interface (10) for reading inductively or capacitively and/or that instead of the electrode (9) at least a second sensor (7) is used.

16. The method according to at least one of the preceding claims 13 to 15, **characterized in that** a change in the alternating voltage between the at least one sensor (7) and the electrode (9) is passed on by means of the second device (6) for galvanic separation and the interface (10) to a display device (13), which displays the change in the alternating voltage (11).

17. The method according to at least one of the preceding claims 13 to 16, **characterized in that** a device (1) according to at least one of the preceding claims 1 to 11 is used for carry out the method.

## Revendications

1. Dispositif (1) de détermination du niveau de remplissage d'électrolyte d'au moins une cellule électrochimique (2) d'une batterie utilisant un électrolyte liquide (3), lequel dispositif présente un dispositif de génération de tension alternative (4) pour générer une tension alternative, un premier dispositif (5) pour séparer galvaniquement la tension alternative générée de ladite au moins une cellule électrochimique (2), le premier dispositif (5) de séparation galvanique étant conçu pour réduire la tension alternative, un deuxième dispositif (6) pour séparer galvaniquement la tension alternative générée de ladite au moins une cellule électrochimique (2), le deuxième dispositif (6) de séparation galvanique étant conçu pour élever la tension alternative, le deuxième dispositif (6) de séparation galvanique étant branché en parallèle sur le premier dispositif (5) de séparation galvanique, lequel dispositif présente au moins un capteur (7) composé d'un matériau inerte pour établir un contact avec l'électrolyte (3) et au moins un dispositif de connexion électrique (8) pour établir un contact avec une électrode (9) de ladite au moins une cellule électrochimique (2), ledit au moins un capteur (7) et ledit au moins un dispositif de connexion électrique (8) étant disposés entre le premier et le deuxième dispositif (5, 6) de séparation galvanique, en parallèle sur ceux-ci, et lequel dispositif présente une interface (10) branchée en aval du deuxième dispositif (6) de séparation galvanique pour extraire une tension alternative (11) modifiée appliquée entre ledit au moins un capteur (7) et l'électrode (9).

2. Dispositif (1) selon la revendication 1, **caractérisé en ce que** le dispositif de génération de tension alternative (4) est un générateur de tension alternative.

3. Dispositif (1) selon au moins l'une des revendications précédentes 1 ou 2, **caractérisé en ce que** le premier dispositif (5) de séparation galvanique et le deuxième dispositif (6) de séparation galvanique sont conçus pour le découplage inductif ou capacitif de la tension alternative générée de ladite au moins une cellule électrochimique (2).

4. Dispositif (1) selon au moins l'une des revendications précédentes 1 à 3, **caractérisé en ce que** le premier dispositif (5) de séparation galvanique présente un transformateur (5a) et le deuxième dispositif (6) de séparation galvanique un transformateur (6a).

5. Dispositif (1) selon au moins l'une des revendications précédentes 1 à 3, **caractérisé en ce que** le premier dispositif (5) de séparation galvanique présente au moins deux condensateurs (5b) et le deuxième dispositif (6) de séparation galvanique au moins deux condensateurs (6b).

6. Dispositif (1) selon au moins l'une des revendications précédentes 1 à 5, **caractérisé en ce que** le dispositif de génération de tension alternative (4) est conçu pour générer une tension alternative d'une fréquence comprise entre 40 Hz et 20 kHz.

7. Dispositif (1) selon au moins l'une des revendications précédentes 1 à 6, **caractérisé en ce que** le premier dispositif (5) de séparation galvanique est conçu pour réduire la tension alternative à une valeur d'amplitude comprise entre 1 mV et 1 V.

8. Dispositif (1) selon au moins l'une des revendications précédentes 1 à 7, **caractérisé en ce qu'**un circuit amplificateur (12) pour élever la tension alternative (11) est prévu entre le deuxième dispositif (6) de séparation galvanique et l'interface (10).

9. Dispositif (1) selon au moins l'une des revendications précédentes 1 à 8, **caractérisé en ce que** la batterie est conçue comme une batterie alcaline et ledit au moins un capteur (7) est formé au moins partiellement de graphite, d'un polymère conducteur, de nickel, de métal nickelé, d'acier inoxydable ou que la batterie est conçue comme une batterie au plomb-acide et ledit au moins un capteur (7) est formé de graphite, d'un polymère conducteur, de plomb, de métal gainé de plomb ou plombé.

10. Dispositif (1) selon au moins l'une des revendications précédentes 1 à 9, **caractérisé en ce qu'**un dispositif d'affichage (13) pour afficher le signal de tension alternative extrait, respectivement pour afficher une modification d'une tension alternative (11), est prévu après l'interface (10).

11. Dispositif (1) selon au moins l'une des revendications précédentes 1 à 10, **caractérisé en ce que** ledit au moins un capteur (7) est réglable.

12. Batterie comprenant au moins une cellule électrochimique (2) utilisant un électrolyte liquide (3), **caractérisée en ce que** ladite au moins une cellule électrochimique (2) de la batterie comporte au moins un dispositif (1) de détermination du niveau de remplissage d'électrolyte de ladite au moins une cellule électrochimique (2).

13. Procédé (1) de détermination du niveau de remplissage d'électrolyte d'au moins une cellule électrochimique (2) d'une batterie utilisant un électrolyte liquide (3), lequel procédé est **caractérisé par** les étapes suivantes :
a) une tension alternative est générée au moyen d'un dispositif de génération de tension alternative (4),
b) la tension alternative générée est séparée galvaniquement de ladite au moins une cellule électrochimique (2) par un premier dispositif (5) de séparation galvanique et la tension alternative est diminuée par le premier dispositif (5) de séparation galvanique,
c) la tension alternative diminuée est appliquée à au moins un capteur (7) composé d'un matériau inerte et par l'intermédiaire d'au moins un dispositif de connexion électrique (8) à une électrode (9) de ladite au moins une cellule électrochimique (2), ledit au moins un capteur (7) et l'électrode (9) étant en contact avec l'électrolyte (3) de ladite au moins une cellule électrochimique (2), de sorte qu'il apparaît un court-circuit, ledit au moins un capteur (7) et ledit au moins un dispositif de connexion électrique (8) étant branchés en parallèle sur le premier dispositif (5) de séparation galvanique,
d) un deuxième dispositif (6) de séparation galvanique branché en aval dudit au moins un capteur (7) et dudit au moins un dispositif de connexion électrique (8), en parallèle sur ceux-ci, sépare galvaniquement ladite au moins une cellule électrochimique (2) de l'interface (10) branchée en aval et en parallèle pour extraire la tension alternative, et élève la tension alternative,
e) lorsque ledit au moins un capteur (7) n'est plus en contact avec l'électrolyte (3) de ladite au moins une cellule électrochimique (2), une modification de la tension alternative (11) est constatée via l'interface (10) servant à extraire une tension alternative appliquée au deuxième dispositif (6) de séparation galvanique ou un signal de tension alternative transformé au deuxième dispositif (6) de séparation galvanique.

14. Procédé selon la revendication 13, **caractérisé en ce que** le dispositif de génération de tension alternative (4) génère une tension alternative d'une fréquence comprise entre 40 Hz et 20 kHz.

15. Procédé selon au moins l'une des revendications précédentes 13 ou 14, **caractérisé en ce que** le premier dispositif (5) de séparation galvanique réduit la tension alternative à une valeur d'amplitude comprise entre 1 mV et 1 V et/ou que la tension alternative (11) appliquée audit au moins un capteur (7) est réglée par un découplage inductif ou capacitif au moyen du premier dispositif (5) de séparation galvanique à une valeur d'amplitude inférieure à 1 V, en particulier à une valeur d'amplitude comprise entre 1 mV et 1 V, et/ou qu'en présence d'une tension alternative entre ledit au moins un capteur (7) et l'électrode (9) de ladite au moins une cellule électrochimique (2), le deuxième dispositif (6) de séparation galvanique transmet la tension alternative (11) de façon inductive ou capacitive à l'interface (10) d'extraction et/ou qu'au moins un deuxième capteur (7) est utilisé à la place de l'électrode (9).

16. Procédé selon au moins l'une des revendications précédentes 13 à 15, **caractérisé en ce qu'**une modification de la tension alternative entre ledit au moins un capteur (7) et l'électrode (9) est transmise via le deuxième dispositif (6) de séparation galvanique et l'interface (10) à un dispositif d'affichage (13) qui affiche la modification de la tension alternative (11).

17. Procédé selon au moins l'une des revendications précédentes 13 à 16, **caractérisé en ce qu'**un dispositif (1) selon au moins l'une des revendications précédentes 1 à 11 est utilisé pour mettre en oeuvre le procédé.
